# EUROPÄISCHE PATENTANMELDUNG

(11) **EP 2 505 947 A1**
(43) Veröffentlichungstag der Anmeldung: **03.10.2012**
(21) Anmeldenummer: 11004356.9
(22) Anmeldetag: 26.05.2011
(51) Int. Cl.: F25J 3/04, C03B 5/235, C03B 18/20

(54) **Verfahren und Vorrichtung zur Erzeugung von Floatglas**

(30) Priorität: 29.03.2011 DE 102011015430
(71) Anmelder: Linde Aktiengesellschaft, 80331 Munich (DE)
(72) Erfinder: Lochner, Stefan, 85567 Grafing (DE); Lautenschlager, Tobias, 82194 Gröbenzell (DE); Neuhaus, Oliver, 82049 Pullach (DE)
(74) Vertreter: Imhof, Dietmar

(57) **Zusammenfassung**

Das Verfahren und die Vorrichtung dienen zur Erzeugung von Floatglas. Ein Glasrohstoff (211) wird mittels einem oder mehreren Brennern (210) geschmolzen. Die dabei gewonnene Glasschmelze (212) wird in eine Floatglaswanne (220) eingeleitet. Ein erstes Gasgemisch (112), das Stickstoff (110) und Wasserstoff (111) enthält, wird zur Bildung einer Inertschicht über der eingeleiteten Glasschmelze in die Floatglaswanne (220) eingeleitet. Der oder die Brenner (210) werden mit einem sauerstoffhaltigen Gas und einem Brennstoff (213) betrieben. Als sauerstoffhaltiges Gas wird ein zweites Gasgemisch (122) eingesetzt, das mindestens 35 % Sauerstoff enthält.

## Beschreibung

Als Floatglas wird Flachglas bezeichnet, das im Floatglasverfahren hergestellt wurde. Für das Schmelzen der Glasrohstoffe werden üblicherweise Brenner eingesetzt, die bisher mit Luft oder alternativ mit Sauerstoff beziehungsweise sauerstoffangereicherter Luft ("zweites Gasgemisch") betrieben werden. Das Schmelzen in Glasschmelzöfen mit Brennern, die den Brennstoff mit Sauerstoff anstelle von Luft verbrennen, hat vielfältige Vorteile wie zum Beispiel geringere Stickoxid-Emissionen, reduzierter Staubaustrag, niedrigerer Energieverbrauch, verbesserte Glasqualität und gesteigerte Schmelzleistung. Ein zusätzlicher Vorteil ist die wesentlich geringere Abgasmenge. Abgasreinigungsanlagen können daher kleiner sein und Luftvorwärmer entfallen, was zu niedrigeren Investitionskosten der Glasproduktionslinie führt.

Es ist zudem bekannt, dass man bei der Herstellung von Floatglas in einer Floatglaswanne das geschmolzene Glas anschließend auf einem Bad aus geschmolzenem Zinn herstellt. Hierbei wird, um Verunreinigungen aus dem Metallbad zu entfernen, von unten ein Gemisch aus Stickstoff und Wasserstoff ("erstes Gasgemisch") eingeblasen, das anschließend auch den Raum über dem Bad inertisiert und somit das Zinnbad vor Oxydation und das Glas vor möglichen Verunreinigungen schützt.

Der Erfindung liegt die Aufgabe zugrunde, ein Verfahren dieser Art und eine entsprechende Vorrichtung anzugeben, welche die Umwelt in besonders geringem Maße belasten.

Diese Aufgabe wird durch die kennzeichnenden Merkmale des Anspruchs 1 gelöst.

Bei den bisher bekannten Verfahren werden der Stickstoff für die Inertisierung und der Sauerstoff für die Brenner aus lokalen Speichern entnommen (beispielsweise Flüssigtanks), die von Zeit zu Zeit aus externen Quellen befüllt werden (beispielsweise mittels Tankfahrzeugen).

Im Rahmen der Erfindung werden diese Stoffe jedoch vor Ort in einer Luftzerlegungsanlage erzeugt und mittels Rohrleitungen unmittelbar in die Glasproduktionsanlage im engeren Sinne eingeführt. "Vor Ort" bedeutet hier, dass die Entfernung zwischen Brennern und Floatglaswanne auf der einen Seite und Luftzerlegungsanlage auf der anderen Seite nicht mehr als 2.500 Meter beträgt und dass die Produkte der Luftzerlegungsanlage ausschließlich über Rohrleitungen zu der Floatglaswanne und dem zugehörigen Brenner transportiert werden. Trotz der hohen Kosten für eine Luftzerlegungsanlage vor Ort hat sich im Rahmen der Erfindung herausgestellt, dass das Verfahren dadurch insgesamt besonders kostengünstig und energiesparend und damit auch umweltfreundlich zu betrieben ist.

Unter "Stickstoffprodukt" und "Sauerstoffprodukt" werden hier Produktströme der Luftzerlegungsanlage verstanden, welche die entsprechenden Luftkomponenten in höherer Konzentration als die Luft enthalten. Das Stickstoffprodukt einer Luftzerlegungsanlage enthält insbesondere mindestens 80 % Stickstoff, beispielsweise 90 bis 99 % Stickstoff. Beispielsweise enthält das Stickstoffprodukt noch Verunreinigungen von 0,5 ppm bis 2 % Sauerstoff und von Inertgasen wie Ar, He, Ne, H₂-im Umfang von 1 bis 10 ppm. Das Sauerstoffprodukt enthält mindestens 40 % Sauerstoff, beispielsweise 80 bis 98 % Sauerstoff. Der Stickstoff wird zur Bildung des ersten Gasgemischs mit einer oder mehreren weiteren Komponenten vermischt, insbesondere mit Wasserstoff. Je nach Reinheit des Sauerstoffprodukts und nach genauer Betriebsweise der Brenner kann das Sauerstoffprodukt direkt als zweites Gasgemisch eingesetzt und insbesondere vor der Verbrennung mit dem Brennstoff vermischt werden; alternativ wird es zur Bildung des zweiten Gasgemischs mit Luft oder einem anderen geeigneten Gas verdünnt.

Ein kleiner Teil des Stickstoffprodukts (etwa 100-200 Nm³/h) kann bei Bedarf permanent als Instrumentenluft für Instrumente im Floatprozess verwendet werden. Zudem wird mit einem anderen Teil des Stickstoffprodukts (etwa 300 bis 400 Nm3/h) ca. drei- bis fünfmal pro Jahr für drei bis vier Stunden eine Dachspülung durchgeführt. Diese kleineren Stickstoffmengen können aus einem zur Luftzerlegungsanlage gehörenden Notversorgungstank entnommen werden, da hierzu etwas erhöhte Drücke benötigt werden.

Vorzugsweise liegt der Sauerstoffgehalt des sauerstoffangereicherten Gemischs zwischen 40 % und 99,8 %, insbesondere zwischen 80 und 97 %. (Diese und alle anderen Prozentangaben sind molar zu verstehen, sofern nichts anderes gesagt ist.)

Es ist besonders vorteilhaft, wenn ist die Luftzerlegungsanlage durch eine Tieftemperatur-Luftzerlegungsanlage realisiert ist, in der Luft durch Destillation in Ihre Bestandteile getrennt wird.

Besonders günstig ist eine Mischsäulenanlage nach Patentanspruch 5. Der Stickstoffstrom kann dabei am Kopf der Niederdrucksäule und/oder vom Kopf der Hochdrucksäule entnommen werden.

Mischsäulen-Verfahren und -Vorrichtungen sind in EP 697576 A1 und EP 698772 A1, DE 19951521 A1, EP 1139046 A1, EP 1284404 A1, DE 10209421 A1, DE 10217093 A1, EP 1376037 A1, EP 1387136 A1 und EP 1666824 A1 beschrieben.

Besonders geeignet ist ein Prozess mit arbeitsleistender Entspannung der Mischsäulenluft, wie er an sich beispielsweise in EP 697576 A1 und EP 698772 A1 beschrieben ist. Im Rahmen der Erfindung hat sich herausgestellt, dass sich bei der Floatglasherstellung gerade mit einem derartigen speziellen Prozess überraschend viel Energie einsparen lässt, insbesondere im Vergleich zu anderen Mischsäulenverfahren und mit Tieftemperatur-Luftzerlegungsanlagen ohne Mischsäule. Der Produktdruck des Sauerstoffprodukts liegt hier höher als der Betriebsdruck der Niederdrucksäule, aber niedriger als der Betriebsdruck der Hochdrucksäule. Alternativ zur Mischsäulenluft ("zweiter Einsatzluftstrom") kann ein dritter Luftstrom arbeitsleistend entspannt und dann in die Niederdrucksäule eingeleitet werden.

Hierbei ist es besonders günstig, wenn der Betriebsdruck der Mischsäule zwischen 1,5 und 4,0 bar liegt, insbesondere zwischen 2,5 und 3,5 bar. Dieser Druck reicht im Allgemeinen für die Versorgung des oder der Brenner aus, sodass keine weiteren Maschinen und insbesondere keine Energie für die Verdichtung des Sauerstoffprodukts aufgewendet werden muss.

Vorzugsweise wird der Stickstoff für das erste Gasgemisch aus der Hochdrucksäule abgezogen. Insbesondere in Verbindung mit einem oder mehreren oben genannten weiteren Parametern der Luftzerlegungsanlage ergibt sich damit ein höchst effiziente und damit umweltfreundliche Kombination aus Floatglasherstellung im engeren Sinne und Stickstoff- und Sauerstoffgewinnung vor Ort.

Die Luftzerlegungsanlage wird vorzugsweise so ausgelegt, dass die benötigte Verfahrenskälte in einer einzigen Turbine erzeugt wird, die ausschließlich den zweiten Einsatzluftstrom (die Mischsäulenluft) arbeitsleistend entspannt. Diese Turbine allein deckt die Kältebilanz des Tieftemperatur-Prozesses. Dies erlaubt zusätzlich zur Sauerstoffgewinnung in der Mischsäule die Produktion von Druckstickstoff direkt aus der Hochdrucksäule ohne zusätzlichen Energieaufwand für die Verdichtung des Stickstoffs. Dieser weist einen Sauerstoffgehalt von 0,1 ppm bis 1000 ppm, typischerweise 1 bis 10 ppm und umfasst bis zu 25 % der Einsatzluftmenge.

Ein Flachglaswerk kann mehrere Floatglaswannen aufweisen. Hierbei können einige oder alle Floatglaswannen aus derselben Luftzerlegungsanlage mit Stickstoff versorgt werden. Die Brenner mehrerer oder aller Floatglaswannen können mit Sauerstoff aus der Luftzerlegungsanlage betrieben werden, zum Beispiel mit Sauerstoff ohne Zumischung von Luft. Wenn die Stickstoffmenge ausreicht, ist es unter Umständen ist günstiger, einen oder mehrere Brenner mit einem Luft-Sauerstoffgemisch zu versorgen, anstatt eine größere Luftzerlegungsanlage zu verwenden.

Typischerweise wird zur Erzeugung von Stickstoff eine spezifische Energie von 0,2 kWh/Nm³ benötigt. Diese Energie wird bei der Erfindung eingespart, da durch die gleichzeitige Verwendung von Sauerstoff und Stickstoff aus der Luftzerlegungsanlage der Energieaufwand für die Erzeugung von Stickstoff entfällt.

Bei einem höheren Sauerstoffdruck von etwa 3,0 bar oder mehr reicht möglicherweise die in der Mischsäulenturbine erzeugte Kälte nicht aus. Dann kann alternativ oder zusätzlich ein Teil der Einsatzluft auf Niederdrucksäulendruck entspannt und direkt in die Niederdrucksäule eingeblasen werden. In diesem Fall kann weniger Druckstickstoff direkt der Hochdrucksäule entnommen werden. Der spezifische Energiebedarf für den entnommenen Stickstoff steigt dadurch auf ca. 0,1 KWh/Nm³, was aber immer noch ca. 50 % Einsparung gegenüber der Stickstofferzeugung ohne Nutzung des Sauerstoffs bedeutet. Alternativ könnte die durch die Druckstickstoffentnahme fehlende Kälte durch flüssigen Sauerstoff oder flüssigen Stickstoff aus einer externen Quelle kompensiert werden ("Liquid Assist").

Die Erfindung betrifft außerdem eine Vorrichtung gemäß Patentanspruch 8. Die erfindungsgemäße Vorrichtung kann durch Vorrichtungsmerkmale ergänzt werden, die den Merkmalen der abhängigen Verfahrensansprüche entsprechen.

Die Erfindung sowie weitere Einzelheiten der Erfindung werden im Folgenden anhand eines in den Zeichnungen schematisch dargestellten Ausführungsbeispiels näher erläutert. Hierbei zeigen:
Figur 1 ein Schema des Gesamtverfahrens und
Figur 2 die konkrete Ausgestaltung des Luftzerlegungsverfahrens.

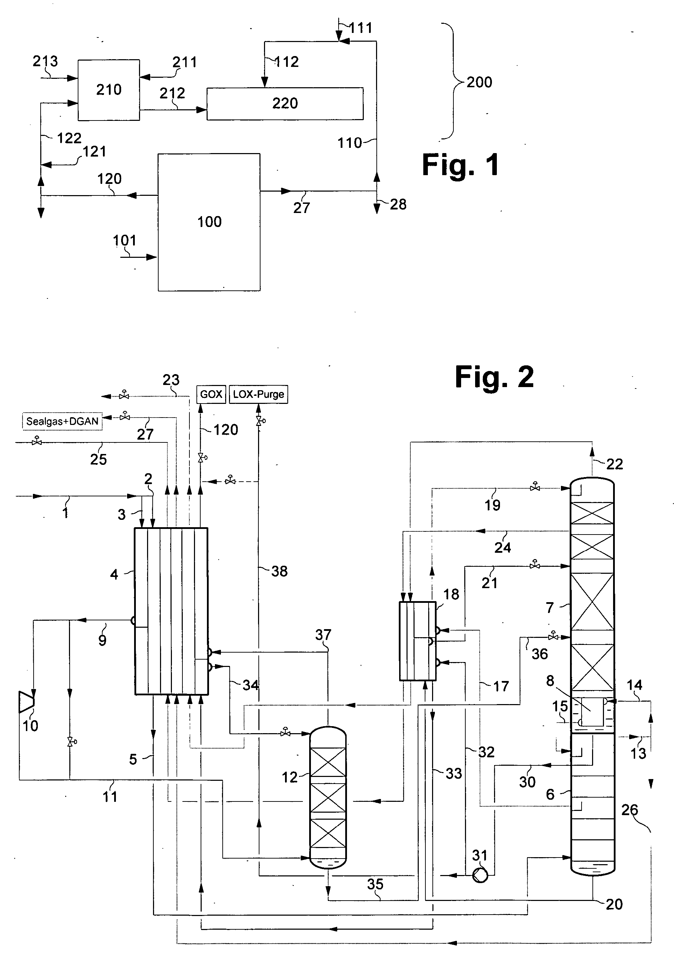

Das Gesamtsystem der **Figur 1** weist eine Luftzerlegungsanlage 100 und eine Glasproduktionseinheit 200 im engeren Sinne auf.

Die Luftzerlegungsanlage 100 ist als Tieftemperatur-Luftzerlegungsanlage ausgebildet. Sie erzeugt aus Einsatzluft 101 ein Stickstoffprodukt 27, 110 und ein Sauerstoffprodukt 120. Diese werden mindestens teilweise als erstes Gasgemisch 112 beziehungsweise als zweites Gasgemisch 122 in die Glasproduktionseinheit 200 eingeführt, gegebenenfalls vermischt mit einem Wasserstoffstrom 111 beziehungsweise einem Luftstrom 121.

Die Glasproduktionseinheit 200 weist einen Brenner 210 und eine Floätglaswanne 220 auf. In dem Brenner wird aus einem Glasrohstoff 211 eine Glasschmelze 212 hergestellt. Letztere wird anschließend in die Floatglaswanne 220 eingeleitet. Dorthin wird auch das erste Gasgemisch 112 geleitet; die Einführung in die Floatglaswanne 220 kann an jeder geeigneten Stelle vorgenommen werden, insbesondere entgegen der zeichnerischen Darstellung von unten. In dem Brenner 210 wird ein Brennstoff 213 verbrannt; das zweite Gasgemisch 122 liefert dazu den Sauerstoff.

In der in **Figur 2** im Detail dargestellten Luftzerlegungsanlage wird Einsatzluft (101 in Figur 1) in einem oder mehreren Luftverdichtern verdichtet und anschließend gereinigt, insbesondere von Wasser und Kohlendioxid. (Luftverdichtung und Luftreinigung sind in Figur 2 nicht dargestellt.) Die gereinigte Einsatzluft 1 steht unter einem Druck von 5,6 bar und wird in einen ersten Einsatzluftstrom (Direktluft) 2 und einen zweiten Einsatzluftstrom (Turbinenluft = Mischsäulenluft) 3 aufgeteilt, die beide einem Hauptwärmetauscher 4 am warmen Ende zugeleitet werden. Der erste Einsatzluftstrom 2 wird bis auf etwa Taupunkt abgekühlt, am kalten Ende dem Hauptwärmetauscher 4 entnommen und über Leitung 5 ohne weitere druckverändernde Maßnahmen der Hochdrucksäule 6 eines Destilliersäulen-Systems zur Stickstoff-Sauerstoff-Trennung zugeführt, das außerdem eine Niederdrucksäule 7 und einen Hauptkondensator 8 aufweist. Die Betriebsdrücke der Säulen (jeweils am Kopf) betragen in dem Ausführungsbeispiel 5,3 bar in der Hochdrucksäule und 1,3 bar in der Niederdrucksäule.

Der zweite Einsatzluftstrom 3 wird in dem Hauptwärmetauscher 4 nur auf eine Zwischentemperatur abgekühlt und unter dieser Zwischentemperatur über Leitung 9 einer Expansionsturbine 10 zugeführt und dort auf einen Druck von 3,2 bar arbeitsleistend entspannt. Der entspannte zweite Einsatzluftstrom 11 wird einer Mischsäule 12 unmittelbar oberhalb deren Sumpfs zugeleitet. Der Betriebsdruck am Kopf der Mischsäule 12 beträgt 3,1 bar.

Der gasförmige Kopfstickstoff 13 der Hochdrucksäule 6 wird zu einem ersten Teil 14 in den Hauptkondensator 8 eingeleitet und dort mindestens teilweise, vorzugsweise im Wesentlichen vollständig kondensiert. Im Hauptkondensator 8 erzeugter flüssiger Stickstoff 15 wird in dem Ausführungsbeispiel vollständig als Rücklauf auf die Hochdrucksäule 6 aufgegeben. Einige praktische beziehungsweise theoretische Böden unterhalb des Kopfs der Hochdrucksäule 6 wird ein etwas weniger reiner Stickstoffstrom 17 flüssig entnommen, in einem Unterkühlungs-Gegenströmer 18 abgekühlt und über Leitung 19 als Rücklauf auf den Kopf der Niederdrucksäule 7 aufgegeben. Die Sumpfflüssigkeit 20 der Hochdrucksäule 6 wird ebenfalls im Unterkühlungs-Gegenströmer 18 abgekühlt und in die Niederdrucksäule 7 eingeleitet, und zwar an einer Zwischenstelle.

Am Kopf der Niederdrucksäule 7 wird Stickstoff 23, etwas darunter Unreinstickstoff 24 abgezogen (alternativ wird die Leitung 24 weggelassen). Beide Ströme werden im Unterkühlungs-Gegenströmer 18 und im Hauptwärmetauscher 4 auf etwa Umgebungstemperatur angewärmt und als warme Ströme 23 beziehungsweise 25 abgezogen. Ein Teil, insbesondere des warmen Unreinstickstoffs 25, kann innerhalb der Luftzerlegungsanlage weiterverwendet werden, zum Beispiel als Regeneriergas für die Luftreinigung und/oder als trockenes Gas für den Betrieb eines Verdunstungskühlers, der kaltes Wasser für die Vorkühlung der Luft liefert (beides nicht dargestellt).

Ein zweiter Teil des gasförmigen Kopfstickstoffs 13 der Hochdrucksäule 6 wird als gasförmiger Druckstickstoffstrom 26 im Hauptwärmetauscher 4 auf etwa Umgebungstemperatur angewärmt und über Leitung 27 aus der Luftzerlegungsanlage herausgeführt. Mindestens ein Teil davon bildet das Stickstoffprodukt (110 in Figur 1), das zur Erzeugung des ersten Gasgemischs 112 für die Glasproduktionseinheit 200 der Figur 1 eingesetzt wird (Sealgas). Ein anderer Teil 28 kann als zusätzliches Druckstickstoffprodukt (DGAN) für andere Zwecke eingesetzt werden.

Die Sumpfflüssigkeit 30 der Niederdrucksäule 7 wird in einer Sauerstoffpumpe 31 flüssig auf einen Druck gebracht, der etwa über Mischsäulendruck liegt und die statische Höhe überwindet. Mindestens ein Teil der gepumpten Flüssigkeit wird als "flüssiger Sauerstoffstrom" über die Leitungen 32, 33 und 34 mit Anwärmung im Unterkühlungs-Gegenströmer 18 und im kalten Teil des Hauptwärmetauschers 4 auf den Kopf der Mischsäule 12 aufgegeben. Im direkten Gegenstrom zum zweiten Einsatzluftstrom 11 wird er in der Mischsäule 12 verdampft. Die Sumpfflüssigkeit 35, 36 der Mischsäule 12 wird in die Niederdrucksäule 7 eingeleitet. Alternativ könnte die Sumpfflüssigkeit 35, 36 der Mischsäule 12 vor der Einspeisung in die Niederdrucksäule 7 im Unterkühlungs-Gegenströmer 18 abgekühlt werden. Am Kopf der Mischsäule 12 wird ein gasförmiger Sauerstoffstrom 37 entnommen, im Hauptwärmetauscher 4 auf etwa Umgebungstemperatur angewärmt, als Sauerstoffprodukt 120 (GOX) herausgeführt und schließlich zur Herstellung des zweiten Gasgemischs (122 in Figur 1) eingesetzt, entweder indem er unmittelbar als zweites Gasgemisch verwendet wird oder indem er mit einem anderen Strom 121 vermischt wird.

Ein anderer Teil 38 der Sumpfflüssigkeit 30 der Niederdrucksäule 7 wird kontinuierlich oder intermittierend als Spülflüssigkeit (LOX-Purge) entfernt.

## Patentansprüche

1. Verfahren zur Erzeugung von Floatglas, bei dem Glasrohstoff (211) mittels einem oder mehreren Brennern (210) geschmolzen wird und die dabei gewonnene Glasschmelze (212) in eine Floatglaswanne (220) eingeleitet wird, wobei ein erstes Gasgemisch (112), das Stickstoff (110) und Wasserstoff (111) enthält, zur Bildung einer Inertschicht über der eingeleiteten Glasschmelze in die Floatglaswanne (220) eingeleitet wird, wobei der oder die Brenner (210) mit einem sauerstoffhaltigen Gas und einem Brennstoff (213) betrieben werden, wobei als sauerstoffhaltiges Gas ein zweites Gasgemisch (122) eingesetzt wird, das mindestens 35 % Sauerstoff enthält, **dadurch gekennzeichnet, dass** in einer Luftzerlegungsanlage (100) vor Ort mindestens ein Sauerstoffprodukt (120) und mindestens ein Stickstoffprodukt (110) hergestellt werden, wobei das Stickstoffprodukt (110) zur Herstellung des ersten Gasgemischs (112) und das Sauerstoffprodukt (120) zur Herstellung des zweiten Gasgemischs (122) eingesetzt werden.

2. Verfahren nach Anspruch 1, **dadurch gekennzeichnet, dass** der Sauerstoffgehalt des zweiten Gasgemischs (122) zwischen 40 % und 99,8 %, insbesondere zwischen 80 und 97 % liegt.

3. Verfahren nach Anspruch 1 oder 2, **dadurch gekennzeichnet, dass** die Luftzerlegungsanlage (100) als Tieftemperatur-Luftzerlegungsanlage ausgebildet ist.

4. Verfahren nach Anspruch 3, **dadurch gekennzeichnet, dass** die Tieftemperatur-Luftzerlegungsanlage (100) ein Destilliersäulen-System zur Stickstoff-Sauerstoff-Trennung und eine Mischsäule (12) aufweist, wobei
- das Destilliersäulen-System zur Stickstoff-Sauerstoff-Trennung eine Hochdrucksäule (6) und eine Niederdrucksäule (7) aufweist,
- ein erster Einsatzluftstrom (2, 5) in die Hochdrucksäule (6) eingeleitet wird,
- ein flüssiger Sauerstoffstrom (30, 32, 33, 34) aus der Niederdrucksäule (7) in den oberen Bereich der Mischsäule (12) eingeleitet wird,
- ein zweiter Einsatzluftstrom (3, 9, 11) gasförmig in den unteren Bereich der Mischsäule (12) eingeleitet wird,
- ein gasförmiger Sauerstoffstrom (37) aus dem oberen Bereich der Mischsäule (12) entnommen und mindestens zum Teil als Sauerstoffprodukt (120) herausgeführt und zur Herstellung des zweiten Gasgemischs (122) eingesetzt wird und
- ein Stickstoffstrom (26,27) aus dem Destilliersäulen-System zur Stickstoff-Sauerstoff-Trennung abgezogen und mindestens zum Teil als Stickstoffprodukt (110) herausgeführt und zur Herstellung des ersten Gasgemischs (112) eingesetzt wird.

5. Verfahren nach Anspruch 4, **dadurch gekennzeichnet, dass** der zweite Einsatzluftstrom (3, 9) vor seiner Einleitung in die Mischsäule (12) arbeitsleistend entspannt (10) wird.

6. Verfahren nach Anspruch 4 oder 5, **dadurch gekennzeichnet, dass** der Betriebsdruck der Mischsäule (12) zwischen 1,5 und 3,5 bar liegt, insbesondere zwischen 2,5 und 3,2 bar.

7. Verfahren nach einem der Ansprüche 4 bis 6, **dadurch gekennzeichnet, dass** ein gasförmiger Druckstickstoffstrom (13) aus der Hochdrucksäule (6) abgezogen und mindestens zum Teil (26, 27) als Stickstoffprodukt (110) herausgeführt und zur Herstellung des ersten Gasgemischs (112) eingesetzt wird.

8. Vorrichtung zur Erzeugung von Floatglas mit einem oder mehreren Brennern (210) zum Schmelzen von Glasrohstoff (211), mit Mitteln zum Einleiten der dabei gewonnenen Glasschmelze (212) in eine Floatglaswanne (220), mit Mitteln zum Einleiten eines erstes Gasgemisch (112), das Stickstoff (110) und Wasserstoff (111) enthält, zur Bildung einer Inertschicht über der eingeleiteten Glasschmelze in die Floatglaswanne (220) und mit Mitteln zum Einleiten eines sauerstoffhaltigen Gases und einem Brennstoffs (213) in den oder die Brenner (210), wobei die Mittel zum Einleiten eines sauerstoffhaltigen Gases in den oder die Brenner (210) mit einer Quelle für ein zweites Gasgemisch (122) verbunden sind, das mindestens 35 % Sauerstoff enthält, **gekennzeichnet durch** eine Luftzerlegungsanlage (100) vor Ort zur Herstellung mindestens eines Sauerstoffprodukts (120) und mindestens eines Stickstoffprodukts (110), **durch** Mittel zur Bildung des ersten Gasgemischs (112) unter Verwendung des Stickstoffprodukts (110) und **durch** Mittel zur Bildung des zweiten Gasgemischs (122) unter Verwendung des Sauerstoffprodukts (120).
